# EUROPEAN PATENT APPLICATION

(11) **EP 3 282 802 A1**
(43) Date of publication of application: **14.02.2018**
(21) Application number: 16776674.0
(22) Date of filing: 08.04.2016
(51) Int. Cl.: H04W 74/08, H04J 11/00, H04L 1/08, H04W 72/04

(54) **USER TERMINAL, WIRELESS BASE STATION, AND WIRELESS COMMUNICATION METHOD**

(30) Priority: 09.04.2015 JP 2015080402
(71) Applicant: NTT DOCOMO, INC., Chiyoda-ku Tokyo 100-6150 (JP)
(72) Inventor: TAKEDA, Kazuaki, Tokyo 100-6150 (JP); KIYOSHIMA, Kohei, Tokyo 100-6150 (JP); YASUKAWA, Shimpei, Tokyo 100-6150 (JP); NAGATA, Satoshi, Tokyo 100-6150 (JP)
(74) Representative: Hoffmann Eitle
(86) International application number: PCT/JP2016/061505
(87) International publication number: WO 2016/163508

(57) **Abstract**

The present invention is designed to optimize the uplink random access procedure even when coverage enhancement is applied to communication by user terminals, in which the bandwidth for use is limited to partial reduced bandwidths in a system bandwidth. A user terminal, in which the bandwidth to use is limited to a partial reduced bandwidth in a system bandwidth, has a receiving section that receives information related to repetitious transmission of a PRACH (Physical Random Access CHannel); and a transmission section that transmits the PRACH in repetitions in part or all of subframes based on the information related to repetitious transmission.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see, for example, non-patent literature 1). Also, successor systems of LTE (also referred to as, for example, "LTE-advanced" (hereinafter referred to as "LTE-A"), "FRA" (Future Radio Access) and so on) are under study for the purpose of achieving further broadbandization and increased speed beyond LTE.

Now, accompanying the cost reduction of communication devices in recent years, active development is in progress in the field of technology related to machine-to-machine (M2M) communication to implement automatic control of network-connected devices and allow these devices to communicate with each other without involving people. In particular, 3GPP (3rd Generation Partnership Project) is promoting the standardization of MTC (Machine-Type Communication) for cellular systems for machine-to-machine communication, among all M2M technologies (see non-patent literature 2). For example, MTC terminals are being studied for use in a wide range of fields such as electric meters, gas meters, vending machines, vehicles and other industrial equipment.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.888 "Study on provision of low-cost Machine-Type Communications (MTC) User Equipments (UEs) based on LTE (Release 12)"

### Summary of Invention

### Technical Problem

From the perspective of reducing the cost and improving the coverage area in cellular systems, among all MTC terminals, low-cost MTC terminals (low-cost MTC UEs) that can be implemented in simple hardware structures have been increasingly in demand. Low-cost MTC terminals can be implemented by limiting the bandwidth to use in the uplink (UL) and the downlink (DL) to a portion (one component carrier, for example) of a system bandwidth.

When the bandwidth for use is limited to a portion of a system bandwidth (for example, to a 1.4-MHz frequency bandwidth), the receiving performance deteriorates. Furthermore, a study is in progress to apply coverage enhancement to MTC terminals. As a method of achieving improved receiving performance and enhanced coverage in MTC terminals, it may be possible to employ the method of "repetition," which improves the received-signal-to-interference/noise ratio (SINR: Signal-to-Interference plus Noise Ratio) by repeating transmitting the same signal over multiple subframes in the downlink (DL) and/or the uplink (UL).

This repetition can be applied to the uplink random access procedure. However, there is no established method of applying repetition to the uplink random access procedure in a communication environment in which the bandwidth for use is limited to a portion of a system bandwidth. Thus there is a need to optimize the uplink random access procedure for user terminals that use limited bandwidths.

The present invention has been made in view of the above, and it is therefore an object of the present invention to provide a user terminal, a radio base station and a radio communication method that can optimize the uplink random access procedure even when coverage enhancement is applied to communication by user terminals that are limited to using partial reduced bandwidths in a system bandwidth as bandwidths for their use.

### Solution to Problem

According to one example of the present invention, a user terminal, in which the bandwidth to use is limited to a partial reduced bandwidth in a system bandwidth, has a receiving section that receives information related to repetitious transmission of a PRACH (Physical Random Access CHannel), and a transmission section that transmits the PRACH in repetitions in part or all of subframes based on the information related to repetitious transmission.

### Advantageous Effects of Invention

According to the present invention, it is possible to optimize the uplink random access procedure even when coverage enhancement is applied to communication by user terminals, in which the bandwidth for use is limited to partial reduced bandwidths in a system bandwidth.

### Brief Description of Drawings

FIGs. 1 provide diagrams, each illustrating an example of the arrangement of reduced bandwidths in a downlink system bandwidth;
FIG. 2 is a diagram to illustrate another example of the arrangement of reduced bandwidths in a downlink system bandwidth;
FIG. 3 is a diagram to explain the uplink random access procedure in existing LTE systems;
FIG. 4 is a diagram to explain a random access configuration table;
FIG. 5 is a diagram to explain PRACHs transmitted from MTC terminals;
FIG. 6 is a diagram to explain PRACHs transmitted from MTC terminals by applying CDM;
FIG. 7 is a diagram to explain PRACHs transmitted from MTC terminals by applying frequency hopping;
FIG. 8 is a diagram to explain PRACHs transmitted from MTC terminals by applying frequency hopping;
FIG. 9 is a diagram to explain a random access configuration table, in which new, additional random access configurations are provided;
FIG. 10 is diagram to explain a random access configuration table, in which replacement content is provided in part of the random access configurations;
FIG. 11 is a diagram to illustrate a schematic structure of a radio communication system according to an embodiment of the present invention;
FIG. 12 is a diagram to illustrate an example of an overall structure of a radio base station according to the present embodiment;
FIG. 13 is a diagram to illustrate an example of a functional structure of a radio base station according to the present embodiment;
FIG. 14 is a diagram to illustrate an example of an overall structure of a user terminal according to the present embodiment; and
FIG. 15 is a diagram to illustrate an example of a functional structure of a user terminal according to the present embodiment.

### Description of Embodiments

A study in progress to limit the processing capabilities of terminals by making the peak rate low, limiting the resource blocks, allowing limited RF reception and so on, in order to reduce the cost of MTC terminals. For example, the maximum transport block size in unicast transmission using a downlink data channel (PDSCH: Physical Downlink Shared Channel) is limited to 1000 bits, and the maximum transport block size in BCCH transmission using a downlink data channel is limited to 1000 bits or less. Furthermore, the downlink data channel bandwidth is limited to 6 resource blocks (also referred to as "RBs" (Resource Blocks), "PRBs" (Physical Resource Blocks), etc.). Furthermore, the RFs to receive in MTC terminals are limited to one.

Furthermore, the transport block size and the resource blocks in low-cost MTC terminals (low-cost MTC UEs) are more limited than in existing user terminals, and therefore low-cost MTC terminals cannot connect with cells that comply with LTE Rel. 8 to 11. Consequently, low-cost MTC terminals connect only with cells where a permission of access is reported to the low-cost MTC terminals in broadcast signals. Furthermore, a study is in progress to limit not only downlink data signals, but also various control signals that are transmitted on the downlink (such as system information, downlink control information and so on), data signals and various control signals that are transmitted on the uplink, and/or other signals to predetermined reduced bandwidths (for example, 1.4 MHz).

Such band-limited MTC terminals need to be operated on the LTE system bandwidth, considering the relationship with existing user terminals. For example, in a system bandwidth, frequency-multiplexing of band-limited MTC terminals and band-unlimited existing user terminals is supported. Furthermore, the band-limited user terminals can only support RFs of predetermined reduced bandwidths in the uplink and the downlink. Here, MTC terminals refer to terminals in which the bandwidth to use is limited to a bandwidth reduced within a system bandwidth, and the existing user terminals refer to terminals in which the system bandwidth is the bandwidth to use.

That is, the upper limit bandwidth for use for MTC terminals is limited to predetermined reduced bandwidths, while, in existing user terminals, the system bandwidth is configured as the upper limit of the bandwidth to use. MTC terminals are designed presuming reduced bandwidths, and therefore the hardware structure is simplified, and their processing capabilities are low compared to existing user terminals. Note that MTC terminal may be referred to as "MTC UEs."
Existing user terminals may be referred to as "normal UEs," "non-MTC UEs," and so on.

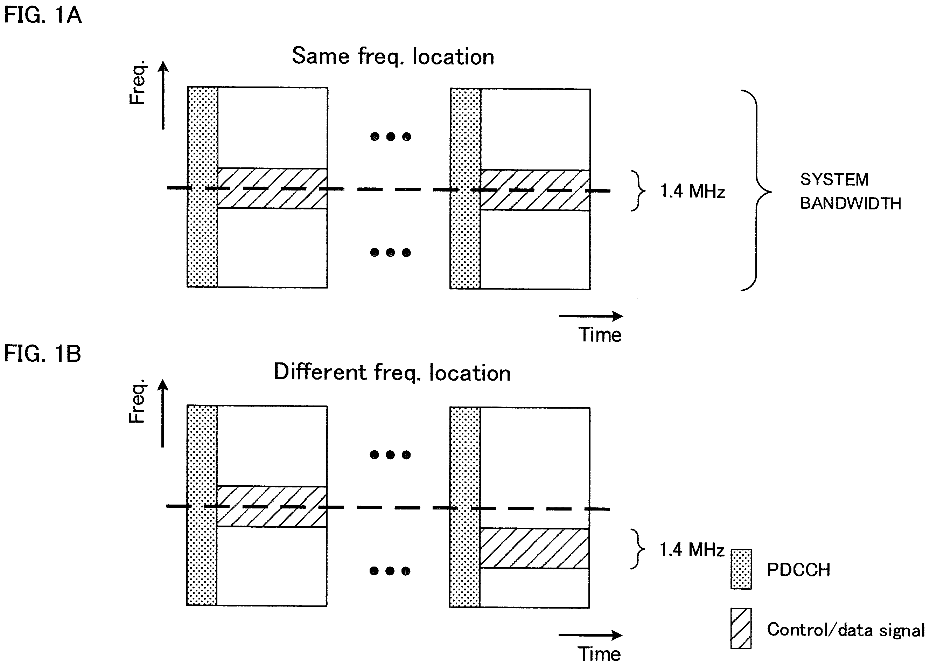

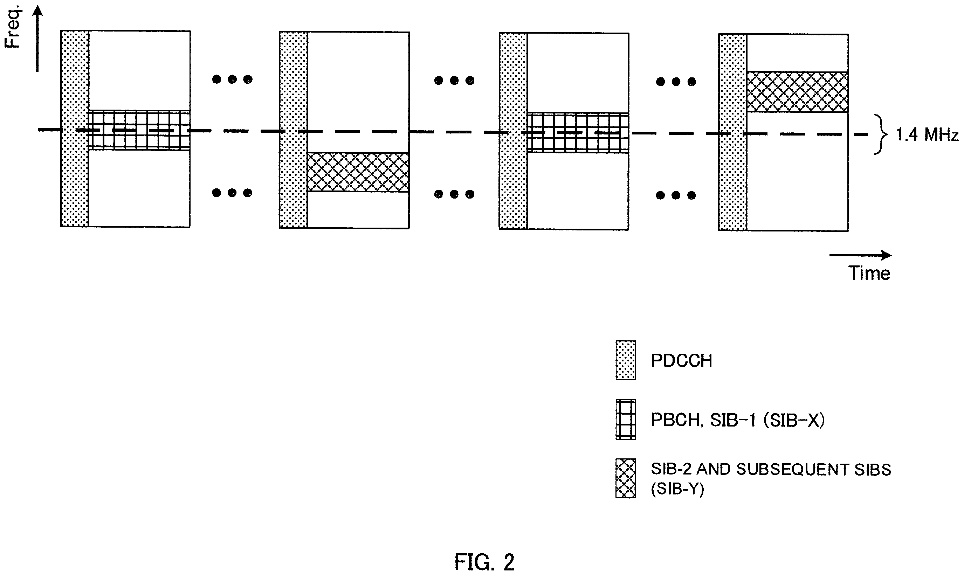

Now, the arrangement of reduced bandwidths in a downlink system bandwidth will be described with reference to FIGs. 1 and FIG. 2. As illustrated in FIG. 1A, the bandwidth for use for MTC terminals is limited to a partial reduced bandwidth (for example, 1.4 MHz) in a system bandwidth. When a reduced bandwidth is fixed in a predetermined frequency location in a system bandwidth, no frequency diversity effect can be achieved, and therefore the spectral efficiency might decrease. On the other hand, as illustrated in FIG. 1B, when a reduced bandwidth to constitute the bandwidth to use changes its frequency location in every subframe, a frequency diversity effect can be achieved, and therefore the decrease of spectral efficiency can be reduced.

For example, when, as illustrated in FIG. 2, broadcast information is transmitted by changing the frequency location of a reduced bandwidth every subframe, system information such as the PBCH (Physical Broadcast Channel) signal and SIB (System Information Block)-1, and system information such as SIB-2 and subsequent information are transmitted in different frequency locations. System information such as the PBCH and/or others may be transmitted to a user terminal in idle mode in the reduced bandwidth at the center frequency location of the system bandwidth. In this case, if information to indicate the frequency locations of subsequent SIBs can be placed in broadcast information such as the PBCH signal and SIB-1, it is possible to change the frequency locations of subsequent SIBs.

Now, a study is in progress to apply coverage enhancement to wireless communication by MTC terminals. For example, for MTC terminals, coverage enhancement of maximum 15 dB is under study, in comparison to existing user terminals. As for the method of implementing coverage enhancement in wireless communication by MTC terminals, a study is going on to apply repetition, in which the same signal is transmitted in repetitions in the downlink (DL) and/or the uplink (UL).

This repetition may be applied to the uplink random access procedure. However, there is no established method of applying repetition to the uplink random access procedure in a communication environment in which the bandwidth for use is limited to a portion of a system bandwidth. The uplink random access procedure for user terminals that use limited bandwidths as described above need to be optimized considering the compatibility with the specifications of the existing uplink random access procedure, spectral efficiency, and so on.

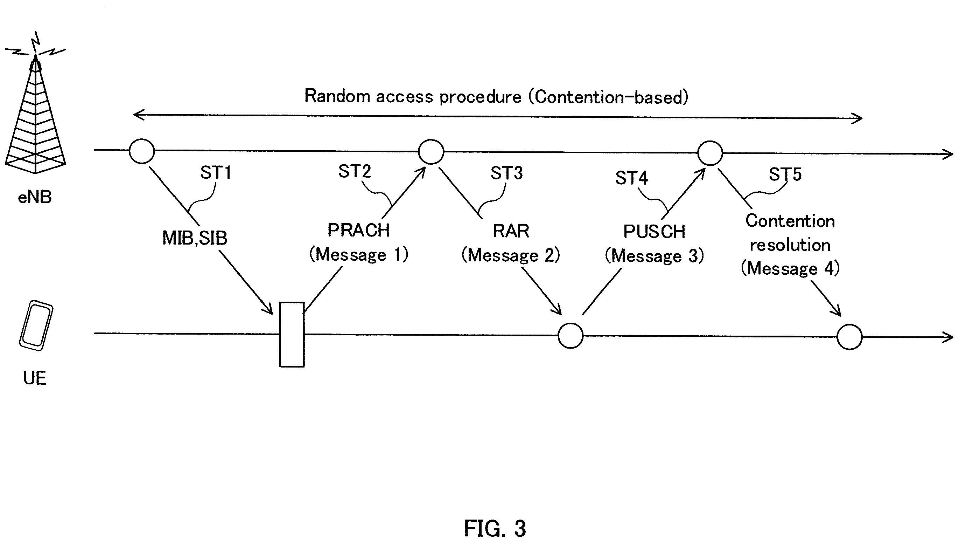

Here, the uplink random access procedure in existing LTE systems will be briefly described with reference to FIG. 3. FIG. 3 illustrates an overview of what is commonly referred to as "contention-based random access" (CBRA) in random access.

As illustrated in FIG. 3, in the random access procedure in existing LTE systems, the MIB (Master Information Block) and SIBs (System Information Blocks) are transmitted from a radio base station eNB to a user terminal UE in the downlink (step (hereinafter referred to as "ST") 1). Information that is necessary to receive SIBs is broadcast to the user terminal in the MIB, and, based on the MIB, the user terminal receives the subsequent SIBs.

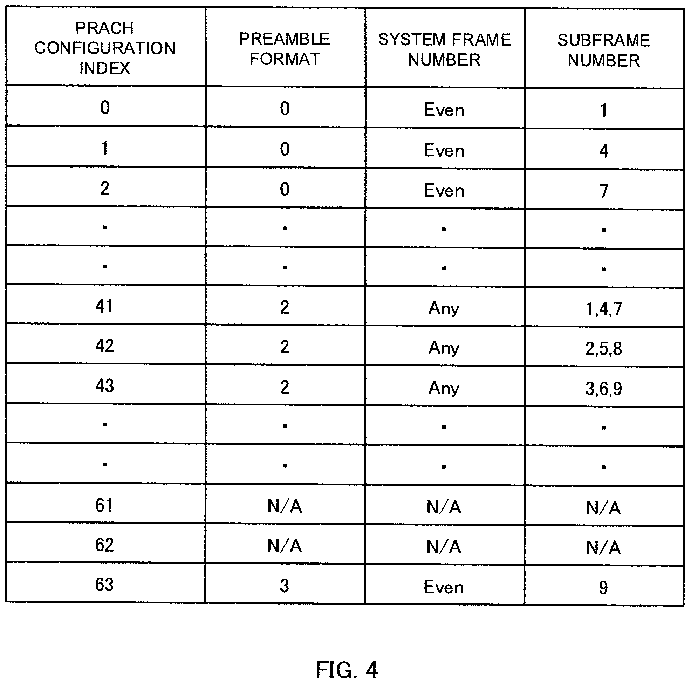

In this case, in accordance with a table in which random access configurations are defined (random access configuration table), PRACH configuration indices are included in the subsequent SIBs. FIG. 4 is a diagram to explain the random access configuration table. FIG. 4 illustrates part of the random access configurations in the random access configuration table.

As illustrated in FIG. 4, the random access configuration table provides 64 PRACH configuration indices #0 to #63. Each PRACH configuration index is associated with a preamble format, a system frame number and a subframe number. The user terminal UE learns in which system frames and subframes the PRACH can be transmitted by detecting the PRACH configuration indices contained in SIBs.

For example, upon receiving PRACH configuration index #2, the user terminal UE learns that the PRACH can be transmitted in the seventh subframe in even-numbered system frames. Meanwhile, upon receiving PRACH configuration index #41, the user terminal UE learns that the PRACH can be transmitted in one of the first, the fourth and the seventh subframe in all (any) system frames.

Having identified the system frame numbers and subframe numbers where the PRACH can be transmitted, the user terminal UE transmits a random access preamble (PRACH) in the nearest subframe that can transmit PRACH (ST2: message 1). The radio base station eNB, upon detecting the random access preamble, transmits a random access response (RAR) in response to that (ST3: message 2).

After having transmitted the random access preamble, the user terminal UE tries to receive message 2 for a predetermined period. When the user terminal UE fails to receive message 2, the user terminal UE raises the transmission power of the PRACH and transmits (retransmits) message 1 again. Note that increasing the transmission power when retransmitting signals is also referred to as "power ramping."

The user terminal UE, when receiving the random access response, transmits a data signal by using a physical uplink shared channel (PUSCH), which is specified by an uplink grant included in the random access response (ST4: message 3). The radio base station eNB, upon receiving message 3, transmits a contention resolution message to the user terminal UE (ST5: message 4). The user terminal UE identifies the radio base station eNB by establishing synchronization using these messages 1 to 4, and thereupon finishes the random access procedure and establishes a connection.

As described above, according to the random access configuration table, the PRACH can be transmitted only in one subframe per system frame. When a random access procedure like this employed in a communication environment in which the bandwidth that can be used is limited to a portion of the system bandwidth, this may lead to a situation where the number of repetitions is insufficient, and where, therefore, the receiving performance cannot be improved sufficiently, and the coverage cannot be enhanced sufficiently.

So, the present inventors have found out that, even in a communication environment, in which the bandwidth for use is limited to a portion of the system bandwidth, it is possible to improve the receiving performance sufficiently, or achieve sufficient coverage enhancement, by reporting information about repetitious transmission of the PRACH (repetition) within system frames and/or between system frames (for example, information as to whether or not repetition is needed, the number of repetitions, the resources, and so on) from a radio base station, and allowing a user terminal (MTC terminal) to transmit the PRACH in repetitions in accordance with this.

Now, the radio communication method according to the present embodiment will be described below. When a user terminal (MTC terminal), in which the bandwidth for use is limited to a partial reduced bandwidth (bandwidth reduced) in a system bandwidth, establishes frequency synchronization in the uplink, after synchronization is captured in the downlink, broadcast information and system information are reported. Also, an SI-RNTI (System Information Radio Temporary Identifier) is detected in the common search space of a downlink control channel (EPDCCH: Enhanced Physical Downlink Control CHannel). Then, an SIB for MTC (for reduced bandwidths) is demodulated, based on the SI-RNTI, as system information for the reduced bandwidth, allocated on a data channel (PDSCH). In this case, it is equally possible not to use the EPDCCH, and demodulate the SIB for MTC (for reduced bandwidths), as system information for the reduced bandwidth, allocated on the data channel (PDSCH), based on a predetermined transmission pattern, or based on another transmission pattern reported in another SIB for MTC. In this case, a uniform bandwidth is applied (1.4 MHz), and therefore it is not necessary to report the bandwidth in the MTC SIB.

The SIB for MTC includes the frequency value of the uplink carrier frequency as uplink carrier frequency-pointing information (ul-CarrierFreq). The frequency location to be the basis of the reduced bandwidth (fundamental frequency location) is specified based on this frequency value, and the uplink reduced bandwidth at this fundamental frequency location is configured as the reduced bandwidth for the PRACH. Then, a random access preamble is transmitted from the MTC terminal to the radio base station in the reduced bandwidth for the PRACH, and the random access procedure is started. Note that an SIB to provide system information for reduced bandwidths may be referred to as an "SIB for MTC."

For example, in an SIB for MTC like this, the radio base station includes and reports information about repetitious transmission of the PRACH (repetition) within system frames and/or between system frames (hereinafter referred to as "information about the repetition of the PRACH"). The information about the repetition of the PRACH includes information as to whether or not repetition is needed, the number of repetitions, the resources and so on, but is by no means limited to these. By receiving this information about the repetition of the PRACH, the MTC terminal can know, for example, whether or not it is necessary to repeat the PRACH within system frames and/or between system frames, and transmit the PRACH to the radio base station in repetitions, with a frequency that is suitable for the communicating environment. As a result of this, it becomes possible to improve the receiving performance sufficiently in accordance with the communicating environment and so on, or improve the coverage sufficiently.

Also, the information about the repetition of the PRACH can include system frames in which the PRACH can be transmitted. For example, if there are ten system frames, it is possible to designate two or four specific system frames that can transmit the PRACH, and report these. Also, it is equally possible to specify the cycle of system frames that in which the PRACH can be transmitted. For this cycle, for example, it is possible to designate 40 ms, 80 ms, 160 ms, 320 ms, 640 ms and 1.28 s, and report these. By reporting these, it is possible to reduce the resources required to transmit the PRACH, and prevent overhead.

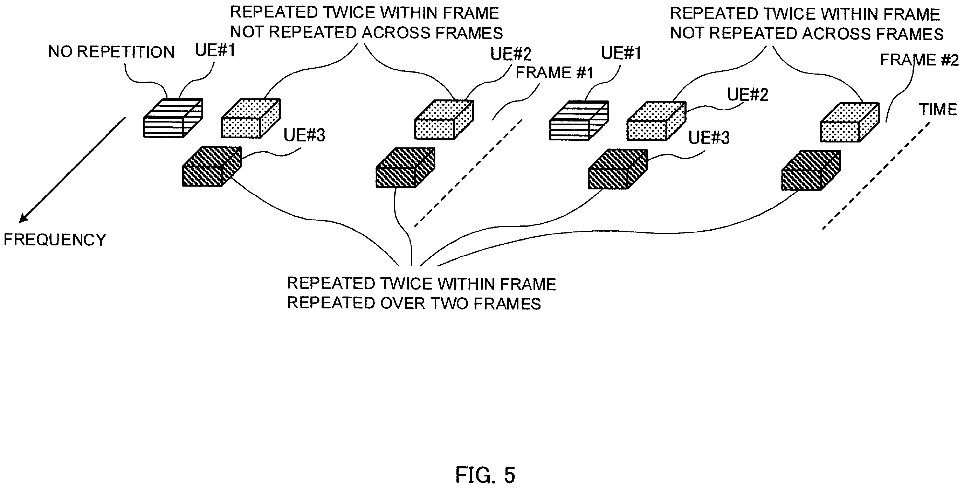

FIG. 5 is a diagram to explain PRACHs transmitted from MTC terminals to a radio base station based on such information about the repetition of the PRACH. Note that FIG. 5 only illustrates two system frames for ease of explanation. Also, FIG. 5 illustrates user terminal UE #1 that transmits the PRACH following the uplink random access procedure of existing LTE systems, for ease of explanation.

In the case illustrated here, PRACH configuration index #7 is reported to user terminal UE #1 in an SIB (see FIG. 4). In the case illustrated in FIG. 5, user terminal UE #1 transmit the PRACH to the radio base station by selecting subframe number #2 between subframe numbers #2 and #7. In this case, no repetition is made from user terminal UE #1, and the PRACH is transmitted in the same way as in existing LTE.

With respect to MTC terminal UE #2, a case is illustrated here in which information to the effect that repetition is needed, the number of repetitions is 2 in system frames and repetition is not necessary between system frames (that is, to the effect that the number of repetitions is 2) is reported in an SIB for MTC as information about the repetition of the PRACH. Also, in the case illustrated here, subframes #4 and #9 of the same frequency as that of user terminal UE #1 are reported to MTC terminal UE #2 as resources for repetition. Based on this information about the repetition of the PRACH, MTC terminal UE #2 transmits the PRACH to the radio base station in repetitions in subframes #4 and #9 in system frames #1 and #2.

With respect to MTC terminal UE #3, a case is illustrated here in which information to the effect that repetition is needed and the number of repetitions is 2 in system frames and 2 between system frames (that is, to the effect that the number of repetitions is 4) is reported in an SIB for MTC as information about the repetition of the PRACH. Also, in the case illustrated here, subframes #4 and #9 of a different frequency from that of MTC terminal UE #2 are reported to MTC terminal UE #3 as resources for repetition. Based on this information about the repetition of the PRACH, MTC terminal UE #3 transmits the PRACH to the radio base station in repetitions in subframes #4 and #9 in system frames #1 and #2.

In this way, with the radio communication method according to the present embodiment, information about the repetition of the PRACH within system frames and/or between system frames is reported from a radio base station to an MTC terminal. The MTC terminal transmits the PRACH in repetitions in accordance with this information about the repetition of the PRACH. By this means, the MTC terminal can transmit the PRACH in repetitions, in a frequency that is suitable to the communicating environment and so on, so that it becomes possible to improve the receiving performance sufficiently, or improve the coverage sufficiently.

Note that, to report information about the repetition of the PRACH, for example, PRACH configuration indices can be used (re-used). As illustrated in FIG. 4, the random access configuration table contains PRACH configuration indices that are associated with a plurality of subframe numbers. For example, subframe numbers #1, #4 and #7 are associated with PRACH configuration index #41. By commanding PRACH transmission in part of these multiple subframes or in all of these subframes, the radio base station can report the number of times to repeat the PRACH, and the resources (subframes), in the system frame.

In this case, the radio base station needs to report information about how to use the subframe numbers in the random access configuration table to the MTC terminal. To be more specific, the radio base station needs to report the points in the random access configuration table where the interpretation of the subframe number is different than in existing LTE systems, to the MTC terminal. However, since the contents of the random access configuration table used in existing LTE systems can still be used, it is possible to report the information about the repetition of the PRACH to the MTC terminal without changing the random access procedure for existing LTE systems significantly.

Note that the information about how to use the subframe numbers in the random access configuration table can be reported to the MTC terminal by using, for example, one of an SIB for MTC, higher layer signaling (for example, RRC signaling, MAC signaling, etc.) and downlink control information (DCI).

Now, when a different reduced bandwidth (1.4 MHz) is assigned to each MTC terminal, this may lead to a situation in which the resources to which reduced bandwidths can be allocated run out. So, in order to achieve increased capacity, a study is in progress to apply CDM (Code Division Multiplexing) to signals that are subject to repetitious transmission. To be more specific, a study is in progress to multiplex signals that each MTC terminal transmits and/or receives on the same resources (time/frequency resources) over a plurality of subframes. These signals are applied (multiplied by) varying spreading codes that correspond to each MTC terminal. The transmitting end (for example, an MTC terminal) multiplies signals to transmit in repetitions by spreading code elements in subframe units, and transmits the resulting signals.

The receiving end (for example, a radio base station) performs signal receiving processes (for example, demapping, demodulation, decoding and so on) in accordance with each MTC terminal's spreading code. For example, the radio base station despreads a plurality of subframes of signals that are received, by using despreading codes that correspond to each MTC terminal's spreading code, and decodes the transmission signal from each MTC terminal. Note that, in CDM, for example, OVSF (Orthogonal Variable Spreading Factor) codes are used as spreading codes.

When CDM is applied to a PRACH that is transmitted in repetitions from an MTC terminal, information about the spreading code (for example, an OVSF code) can be placed and reported in the above-described information about the repetition of the PRACH. In this case, for example, by applying CDM to PRACHs that are transmitted in repetitions from different MTC terminals, based on OVSF codes reported, it becomes possible to multiplex PRACHs to be repeated different numbers of times on the same resources (time/frequency resources).

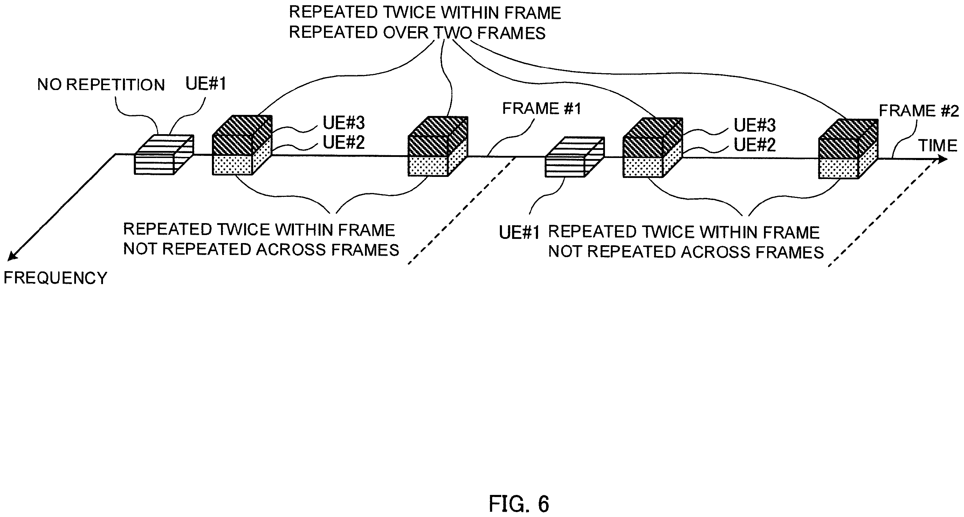

FIG. 6 illustrates a case in which the PRACHs from MTC terminal UEs #2 and #3 illustrated in FIG. 5 on the same resources by using CDM. As illustrated in FIG. 6, the PRACH of MTC terminal UE #2 where the number of repetitions is 2 (for example, the spreading factor is 2) and the PRACH of MTC terminal UE #3 where the number of repetitions is 4 (for example, the spreading factor is 4) are multiplexed the same resources (subframes #4 and #9 of the same frequency).
By thus applying CDM to the PRACHs transmitted from varying MTC terminal UEs #2 and #3 in repetitions, it is possible to improve the temporal and spectral efficiency in system frames.

Note that, when CDM is applied across a plurality of system frames (here, system frames #1 and #2) as in MTC terminal UE #3 illustrated in FIG. 6, it is necessary to fix the top resource (subframe) where PRACHs are multiplexed, in advance, so as to maintain orthogonality between MTC terminals and distinguish between random access preambles transmitted from each UE.

For example, an even-numbered or an odd-numbered subframe in system frames can be made the top resource to multiplex PRACHs on, on a fixed basis. Also, when a spreading code with a large spreading factor such as an OVSF code is used, the subframe to be calculated by the following equation may be specified as the top resource for multiplexing PRACHs. Note that, "R" stands for the top resource where PRACHs are multiplexed, and "N" stands for the spreading factor.
R =subframe number mod N

Also, in wireless communication with MTC terminals, a study is in progress to apply frequency hopping to signals that are subject to repetitious transmission, for improved receiving performance. When frequency hopping is applied to a PRACH transmitted from an MTC terminal, information about frequency hopping can be included and reported in the above-described information about the repetition of the PRACH. The information related to frequency hopping may include, for example, information as to whether or not frequency hopping is needed, the resources available for frequency hopping, and so on, but these are by no means limiting. By receiving information about the repetition of the PRACH including such frequency hopping-related information, an MTC terminal can know whether or not frequency hopping is needed, in addition to whether or not PRACH repetition is needed, so that the MTC terminal can secure the frequency diversity gain, and, meanwhile, transmit the PRACH to a radio base station in repetitions in a frequency that is suitable to the communicating environment and so on.

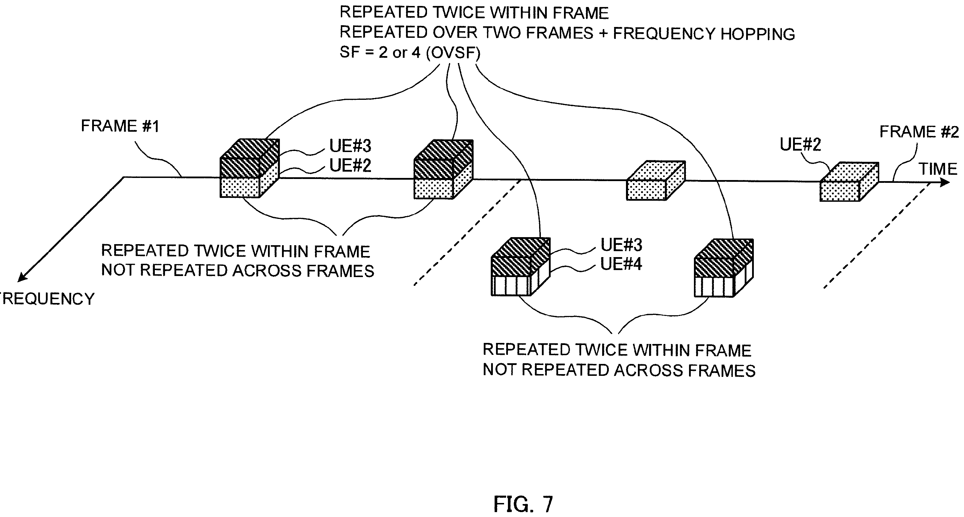

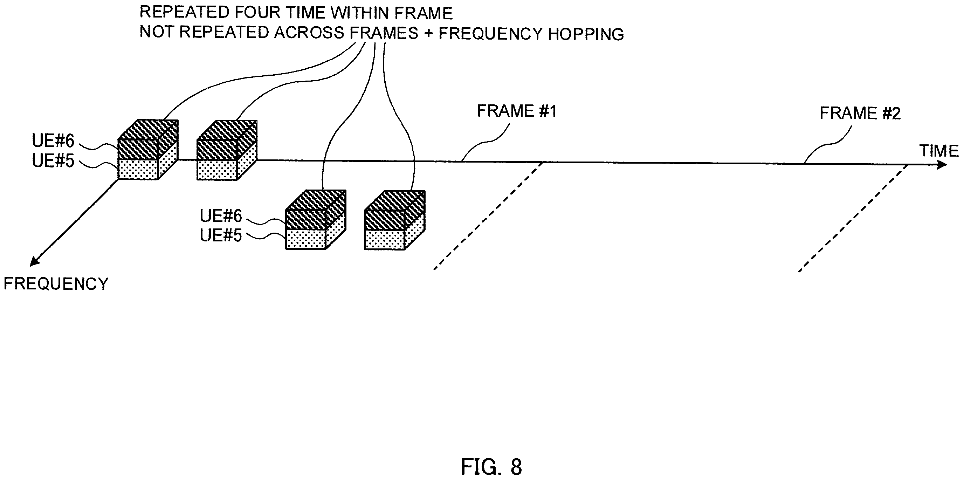

FIG. 7 and FIG. 8 are diagrams to explain PRACHs that are transmitted from MTC terminal by applying frequency hopping. In FIG. 7, a case is illustrated in which frequency hopping is applied to a PRACH across system frames. In FIG. 8, a case is illustrated in which frequency hopping is applied to a PRACH within a system frame. Note that, in FIG. 7 and FIG. 8, only two system frames are illustrated for ease of explanation. Also, assume that, in FIG. 7, the same information about the repetition of the PRACH as in the cases of FIG. 5 and FIG. 6 is reported to MTC terminal UE #2.

In FIG. 7, with respect to MTC terminal UE #4, a case is illustrated in which information to the effect that repetition is needed, the number of repetitions is 2 in system frames and repetition is not necessary between system frames is reported in an SIB for MTC as information about the repetition of the PRACH. Also, in the case illustrated here, subframes #3 and #8 of a different frequency from that of user terminal UE #2 are reported to MTC terminal UE #2 as resources for repetition. Based on this information about the repetition of the PRACH, MTC terminal UE #4 transmits the PRACH to the radio base station in repetitions in subframes #3 and #8 in system frame #2.

With respect to MTC terminal UE #3, a case is illustrated here in which information to the effect that repetition is needed and the number of repetitions is 2 in system frames and 2 between system frames is reported in an SIB for MTC as information about the repetition of the PRACH. Furthermore, with respect to MTC terminal UE #3, a case is illustrated here in which subframes #4 and #9 of the same frequency as that of MTC terminal UE #2 are reported as resources for repetition in system frame #1, and in which, furthermore, subframes #3 and #8 of the same frequency as that of MTC terminal UE #4 are reported as resources for repetition in system frame #2. By reporting different repetition resources between system frames #1 and #2 thus, frequency hopping of the PRACH is made possible. Also, by reporting the same repetition resources as those of MTC terminal UEs #2 and UE #4 in system frames #1 and #2, CDM of PRACHs with different MTC terminals (UE #2 and UE #4) is made possible.

Information about the repetition of the PRACH, including such frequency hopping-related information, can be reported by using PRACH configuration indies. For example, information about the repetition of the PRACH, including information about frequency hopping, can be reported to an MTC terminal by assigning two of the above-described PRACH configuration indices.

To be more specific, it is possible to assign, for example, PRACH configuration index #41 illustrated in FIG. 4 as the first PRACH configuration index to use in the first frequency in an odd-numbered system frame, and, meanwhile, assign, for example, PRACH configuration index #42 illustrated in FIG. 4 as a second PRACH configuration index to use in a second frequency in an even-numbered system frame. In this case, an MTC terminal can transmit the PRACH, in repetitions, in the subframes of subframe numbers #1, #4 and #7 of the first frequency of the odd-numbered system frame, and transmit the PRACH, in repetitions, in the subframes of subframe numbers #2, #5 and #8 of the second frequency of the even-numbered system frame.

In this case, the radio base station has to report information about how to use the system frame numbers to the MTC terminal, in addition to the information about how to use the subframe numbers in the random access configuration table. To be more specific, the radio base station needs to report the points in the random access configuration table where the interpretation of the system frame number is different than in existing LTE systems, to the MTC terminal. However, since the contents of the random access configuration table used in existing LTE systems can still be used, it is possible to report the information about the repetition of the PRACH, including information related to frequency hopping, to the MTC terminal, without changing the random access procedure for existing LTE systems significantly.

Note that the information about how to use the system frame numbers in the random access configuration table can be reported to the MTC terminal by using, for example, one of an SIB for MTC, higher layer signaling (for example, RRC signaling, MAC signaling, etc.) and downlink control information (DCI).

Note that it is equally possible to report information about the repetition of the PRACH, including information related to frequency hopping, to an MTC terminal that employs frequency hopping, by assigning only one of the above-described PRACH configuration indices.

To be more specific, it is possible to assign PRACH configuration index #41, illustrated in FIG. 4, as the PRACH configuration index to use in the first reduced bandwidth in an odd-numbered system frame, and also as the PRACH configuration index to use in a second reduced bandwidth in an even-numbered system frame. In this case, the MTC terminal can transmit the PRACH, in repetitions, in the subframes of subframe numbers #1, #4 and #7 of the first reduced bandwidth in the odd-numbered system frame, and transmit the PRACH, in repetitions, in the subframes of subframe numbers #1, #4 and #7 of the second reduced bandwidth in the even-numbered system frame.

Meanwhile, in FIG. 8, with respect to MTC terminal UE #8, a case is illustrated in which information to the effect that repetition is needed, the number of repetitions is 4 in system frames and repetition is not necessary between system frames is reported in an SIB for MTC as information about the repetition of the PRACH. Also, in the case illustrated here, subframes #1 and #3 of the first frequency in system frame #1 and subframes #7 and #9 of the second frequency in system frame #1 are reported to MTC terminal UE #5 as resources for repetition.

Also, with respect to MTC terminal UE #6, a case is illustrated in which information to the effect that repetition is needed, the number of repetitions is 4 in system frames and repetition is not necessary between system frames is reported in an SIB for MTC as information about the repetition of the PRACH. Also, in the case illustrated here, subframes #1 and #3 of the first frequency in system frame #1 and subframes #7 and #9 of the second frequency in system frame #1 are reported to MTC terminal UE #6 as resources for repetition.

Based on this information about the repetition of the PRACH, MTC terminal UEs #5 and #6 transmits PRACHs to the radio base station, in repetitions, by using subframes #1 and #3 of the first frequency in system frame #1 and subframes #7 and #9 of the second frequency. By reporting different repetition resources between subframes within system frame #1, frequency hopping of PRACHs is made possible. Also, by reporting the same repetition resources between MTC terminal UEs #5 and UE #6 for subframes #1 and #3 and for subframes #7 and #9 in system frame #1, CDM of PRACHs between MTC terminal UE #5 and UE #6 is made possible.

Note that, cases have been described, with the above description, where the information about the repetition of the PRACH is reported by re-using the contents of the random access configuration table used in existing LTE systems. However, the random access configuration table to use in the radio communication method according to the present embodiment is by no means limited to this, and can be changed as appropriate.

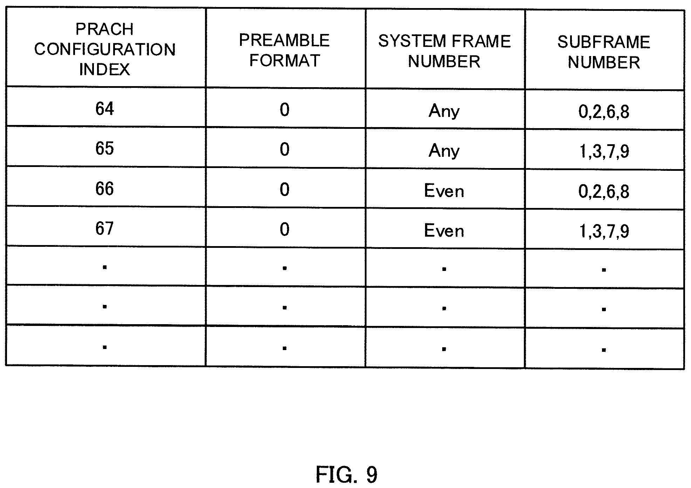

For example, as illustrated in FIG. 9, newly random access configurations may be provided in the random access configuration table of existing LTE systems. FIG. 9 is a diagram to explain a random access configuration table, in which new, additional random access configurations are provided.

The random access configuration table illustrated in FIG. 9 illustrates examples of newly added PRACH configuration indices (#64 to #67). When random access configurations are added anew, it is preferable to provide subframe numbers that take into consideration the PRACHs for MTC, CDM, and so on. Although FIG. 9 illustrates PRACH configurations that presume transmitting a PRACH in repetitions in four subframes, this is by no means limiting.

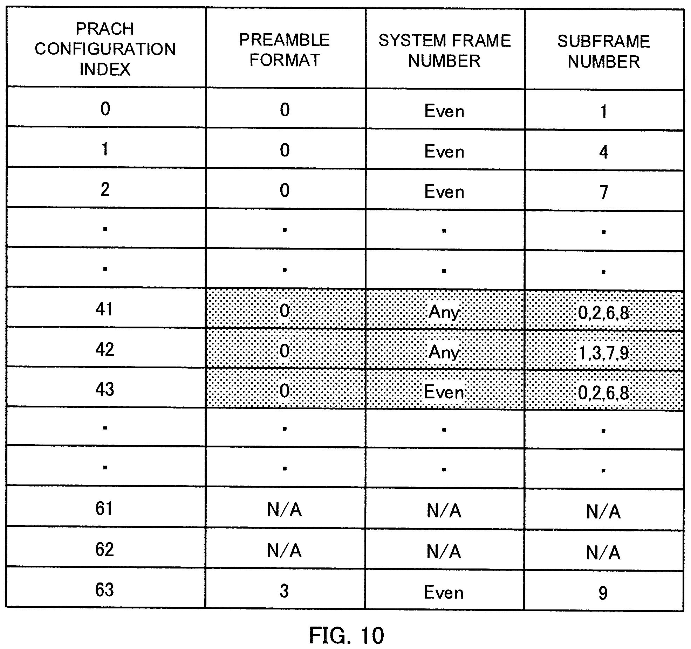

Also, as illustrated in FIG. 10, it is possible to provide random access configurations by replacing part of the contents of the random access configuration table for existing LTE systems. FIG. 10 is a diagram to explain a random access configuration table, in which random access configurations are provided to replace part of the contents of the random access configuration table for existing LTE systems.

The random access configuration table illustrated in FIG. 10 illustrates a case in which PRACH configuration indices #41 to #43 are replaced. As in the case illustrated in FIG. 9, where the random access configurations are replaced, it is preferable to provide subframe numbers that take into consideration the PRACHs for MTC, CDM, and so on. Although FIG. 10 illustrates PRACH configurations that presume transmitting a PRACH in repetitions in four subframes, this is by no means limiting.

### (Structure of Radio Communication System)

Now, the structure of the radio communication system according to an embodiment of the present invention will be described below. In this radio communication system, the radio communication methods according to the embodiment of the present invention are employed. Note that the radio communication methods of the above-described embodiment may be applied individually or may be applied in combination. Here, although MTC terminals will be explained as examples of user terminals in which the bandwidth to use is limited to reduced bandwidths, the present invention is by no means limited to MTC terminals.

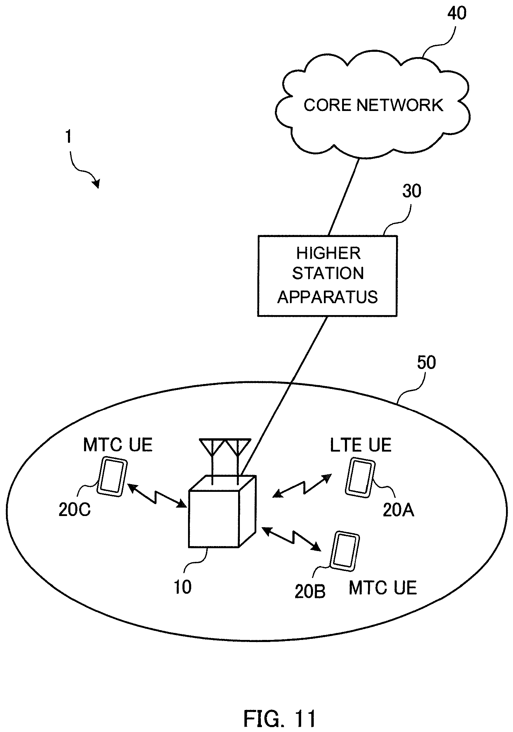

FIG. 11 is a diagram to illustrate a schematic structure of the radio communication system according to an embodiment of the present invention. The radio communication system 1 illustrated in FIG. 11 is an example of employing an LTE system in the network domain of a machine communication system. The radio communication system 1 can adopt carrier aggregation (CA) and/or dual connectivity (DC) to group a plurality of fundamental frequency blocks (component carriers) into one, where the LTE system bandwidth constitutes one unit. Also, although, in this LTE system, the system bandwidth is configured to maximum 20 MHz in both the downlink and the uplink, this configuration is by no means limiting. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 is comprised of a radio base station 10 and a plurality of user terminals 20A, 20B and 20C that are connected with the radio base station 10 by radio. The radio base station 10 is connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these.

A plurality of user terminal 20A, 20B and 20C can communicate with the radio base station 10 in a cell 50. For example, the user terminal 20A is a user terminal that supports LTE (up to Rel-10) or LTE-Advanced (including Rel-10 and later versions) (hereinafter referred to as an "LTE terminal"), and the other user terminals 20B and 20C are MTC terminals that serve as communication devices in machine communication systems. Hereinafter the user terminals 20A, 20B and 20C will be simply referred to as "user terminals 20," unless specified otherwise.

Note that the MTC terminals 20B and 20C are terminals that support various communication schemes including LTE and LTE-A, and are by no means limited to stationary communication terminals such electric meters, gas meters, vending machines and so on, and can be mobile communication terminals such as vehicles. Furthermore, the user terminals 20 may communicate with other user terminals directly, or communicate with other user terminals via the radio base station 10.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bandwidths formed with one or continuous resource blocks per terminal, and allowing a plurality of terminals to use mutually different bandwidths. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Block) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles (RA preambles) for establishing connections with cells are communicated.

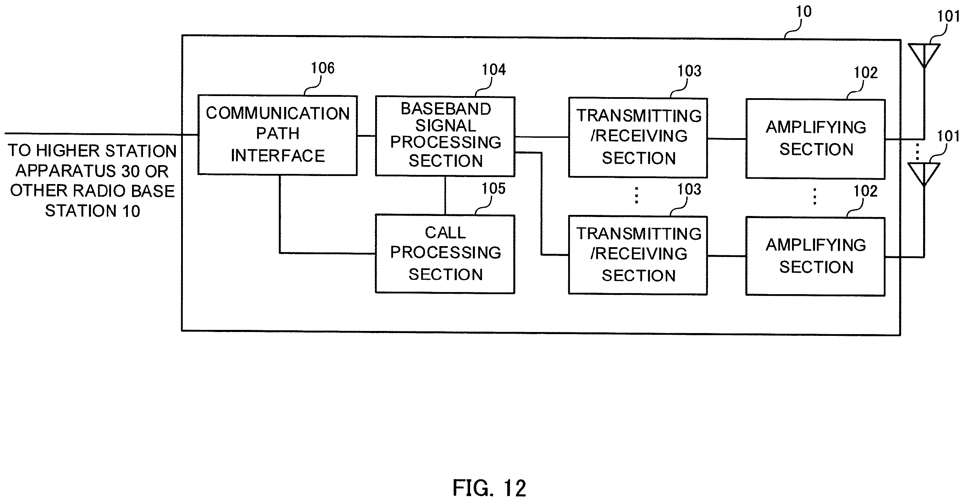

FIG. 12 is a diagram to illustrate an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency bandwidth and transmits the resulting signals. The radio frequency signals subjected to frequency conversion in the transmitting/receiving sections 103 are amplified in the amplifying sections 102, and transmitted from the transmitting/receiving antennas 101. The transmitting/receiving sections 103 can transmit and/or receive various signals in a reduced bandwidth (for example, 1.4 MHz) that is more limited than a system bandwidth (for example, one component carrier).

The transmitting/receiving sections 103 can receive the PRACHs that are transmitted from the user terminals 20 (MTC terminals 20B and 20C) in repetitions. Also, the transmitting/receiving sections 103 can report information about repetitious transmission of the PRACH (information about the repetition of the PRACH) to the user terminals 20 (MTC terminals 20B and 20C). In this case, the transmitting/receiving section 103 can report the information about the repetition of the PRACH to each user terminal 20 (MTC terminals 20B and 20C) by using an SIB for MTC, higher layer signaling (for example, RRC signaling, MAC signaling, etc.), downlink control information and so on. For example, the transmitting/receiving sections 103 report PRACH configuration indices, as information about the repetition of the PRACH.

For the transmitting/receiving sections 103, transmitters/receivers, transmitting/receiving circuits or transmitting/receiving devices that can be described based on common understanding of the technical field to which the present invention pertains can be used.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

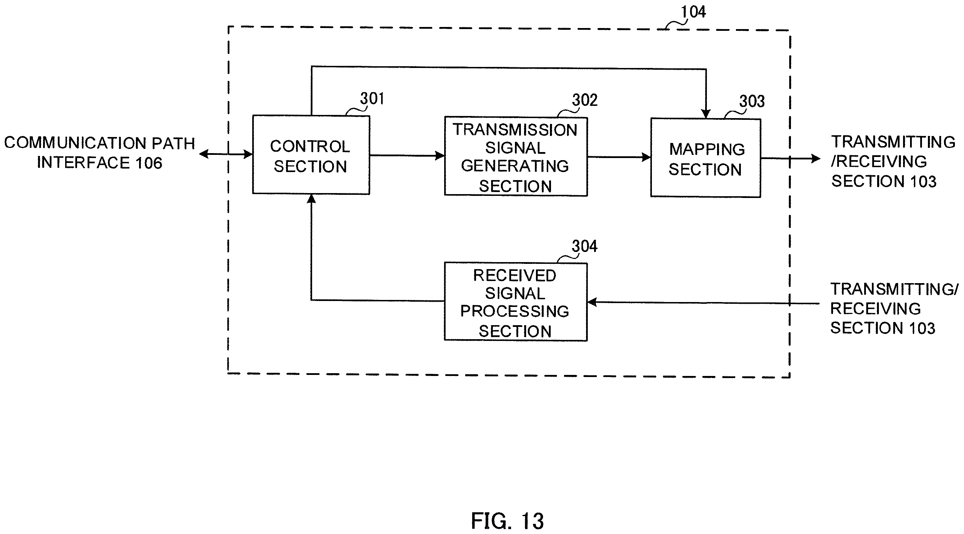

FIG. 13 is a diagram to illustrate an example of a functional structure of a radio base station according to the present embodiment. Note that, although FIG. 10 primarily illustrates functional blocks that pertain to characteristic parts of the present embodiment, the radio base station 10 has other functional blocks that are necessary for radio communication as well. As illustrated in FIG. 13, the baseband signal processing section 104 has a control section (scheduler) 301, a transmission signal generating section (generating section) 302, a mapping section 303 and a received signal processing section 304.

The control section (scheduler) 301 controls the scheduling (for example, resource allocation) of downlink data signals that are transmitted in the PDSCH and downlink control signals that are communicated in the PDCCH and/or the EPDCCH. Also, the control section 301 controls the scheduling of downlink reference signals such as system information, synchronization signals, CRSs (Cell-specific Reference Signals), CSI-RSs (Channel State Information Reference Signals) and so on. Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on.

The control section 301 controls the transmission signal generating section 302 and the mapping section 303 to allocate various signals to reduced bandwidths and transmit these to the user terminals 20. For example, the control section 301 controls downlink system information (the MIB, SIBs, etc.) and EPDCCHs to be allocated to reduced bandwidths.

Also, the control section 301 exerts control to transmit PDSCHs to the user terminals 20 in predetermined reduced bandwidths. Note that, when the radio base station 10 employs coverage enhancement, The control section 301 can exert control so that, for a UL signal (the PRACH, the PUCCH, the PUSCH and so on) from a predetermined user terminal 20, whether or not repetitious transmission is needed (or applied), the repetition factor and the resources (subframes) are configured, and information to include these (information about the repetition of the PRACH) is reported by using an SIB for MTC, higher layer signaling, downlink control information and so on.

For example, the control section 301 can report a PRACH configuration index and information about how to use the subframes associated with this PRACH configuration index, as information about the repetition of the PRACH. In this case, the contents of the random access configuration table used in existing LTE systems can be re-used, so that it is possible to report the information about the repetition of the PRACH to the user terminals 20 (MTC terminals 20B and 20C) without changing the random access procedure in existing LTE systems significantly.

Also, it is equally possible to configure a repetition factor for a DL signal for a predetermined user terminal 20 and transmit this DL signal in repetitions based on this repetition factor. Furthermore, the control section 301 may control this repetition factor to be reported to the user terminal 20 in a control signal (DCI) in the EPDCCH or by using higher layer signaling (for example, RRC signaling, broadcast information, etc.).

For the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Also, the downlink data signals are subjected to a coding process and a modulation process, based on coding rates and modulation schemes that are determined based on channel state information (CSI) from each user terminal 20 and so on.

Also, when repetitious DL signal transmission (for example, repetitious PDSCH transmission) is configured, the transmission signal generating section 302 generates the same DL signal over a plurality of subframes and outputs these signals to the mapping section 303.

For the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined reduced bandwidth radio resources (for example, maximum 6 resource blocks) based on commands from the control section 301, and outputs these to the transmitting/receiving sections 103.

For the mapping section 303, mapper, a mapping circuit or a mapping device that can be described based on common understanding of the technical field to which the present invention pertains can be used.

The received signal processing section 304 performs the receiving processes (for example, demapping, demodulation, decoding and so on) of UL signals transmitted from the user terminals 20 (for example, delivery acknowledgement signals (HARQ-ACKs), data signals that are transmitted in the PUSCH, random access preambles that are transmitted in the PRACH, and so on). The processing results are output to the control section 301.

Also, by using the received signals, the received signal processing section 304 may measure the received power (for example, the RSRP (Reference Signal Received Power)), the received quality (for example, the RSRQ (Reference Signal Received Quality)), channel states and so on. The measurement results may be output to the control section 301.

The receiving process section 304 can be constituted by a signal processor, a signal processing circuit or a signal processing device, and a measurer, a measurement circuit or a measurement device that can be described based on common understanding of the technical field to which the present invention pertains.

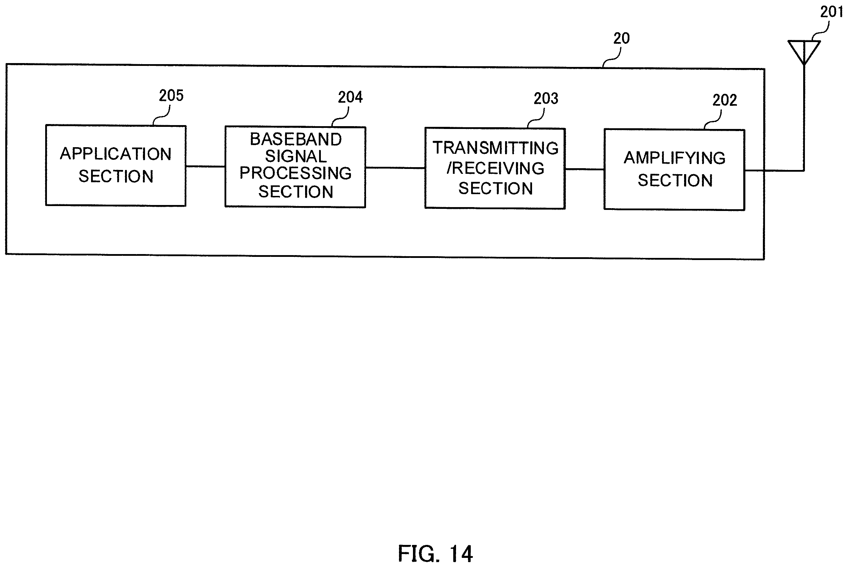

FIG. 14 is a diagram to illustrate an example of an overall structure of a user terminal according to the present embodiment. Note that, although the details will not be described here, normal LTE terminals may operate and act as MTC terminals. A user terminal 20 has a transmitting/receiving antenna 201, an amplifying section 202, a transmitting/receiving section 203, a baseband signal processing section 204 and an application section 205. Note that the transmitting/receiving section 203 is comprised of a transmitting section and a receiving section. Also, the user terminal 20 may have a plurality of transmitting/receiving antennas 201, amplifying sections 202, transmitting/receiving sections 203 and so on.

A radio frequency signal that is received in the transmitting/receiving antenna 201 is amplified in the amplifying section 202. The transmitting/receiving section 203 receives the downlink signal amplified in the amplifying section 202. The received signal is subjected to frequency conversion and converted into the baseband signal in the transmitting/receiving section 203, and output to the baseband signal processing section 204.

The transmitting/receiving section 203 can receive information about repetitious transmission of the PRACH (information about the repetition of the PRACH) from the radio base station 10. For example, the transmitting/receiving section 203 may receive PRACH configuration indices, as information about the repetition of the PRACH, from the radio base station 10. Also, the transmitting/receiving section 203 can transmit the PRACH, in repetitions, in part or all of the subframes, based on the information about the repetition of the PRACH. For example, the transmitting/receiving section 203 transmits the PRACH in repetitions based on at least one of whether or not repetitious transmission is needed, the number of repetitions within system frames and/or between system frames, and the subframes, included in the information about the repetition of the PRACH.

Also, the transmitting/receiving section 203 can transmit the PRACH in repetitions by applying frequency hopping to the PRACH based on information related to frequency hopping, included in the information about the repetition of the PRACH. For example, the transmitting/receiving section 203 can transmit the PRACH in repetitions by applying frequency hopping to the PRACH within system frames and/or between system frames based on the information related to frequency hopping. Furthermore, the transmitting/receiving section 203 can receive a RACH configuration index from the radio base station 10, and transmit the PRACH in repetitions, by applying frequency hopping to the PRACH, in subframes associated with this PRACH configuration index.

For the transmitting/receiving section 203, a transmitter/receiver, a transmitting/receiving circuit or a transmitting/receiving device that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving section 203 and transmitted. The radio frequency signal that is subjected to frequency conversion in the transmitting/receiving section 203 is amplified in the amplifying section 202, and transmitted from the transmitting/receiving antenna 201.

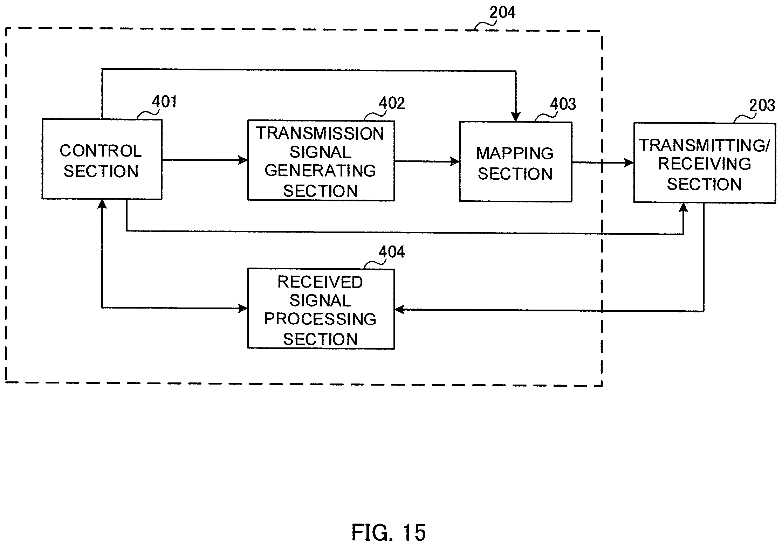

FIG. 15 is a diagram to illustrate an example of a functional structure of a user terminal according to the present embodiment. Note that, although FIG. 15 primarily illustrates functional blocks that pertain to characteristic parts of the present embodiment, the user terminal 20 has other functional blocks that are necessary for radio communication as well. As illustrated in FIG. 15, the baseband signal processing section 204 provided in the user terminal 20 has a control section 401, a transmission signal generating section 402, a mapping section 403 and a received signal processing section 404.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not retransmission control is necessary for the downlink data signals, and so on. To be more specific, the control section 401 controls the transmission signal generating section 402 and the mapping section 403.

Furthermore, the control section 401 determines the PUCCH resources in predetermined subframes, controls the timings (subframes) to transmit PUCCHs, and so on.

Also, the control section 401 exerts control so that, when information about the repetition of the PRACH is reported from radio base station 10, the PRACH is transmitted in repetitions based on this information about the repetition of the PRACH. For example, the control section 401 controls the PRACH to be transmitted in repetitions based on at least one of whether or not repetitious transmission is needed, the number of repetitions within system frames and/or between system frames, and the subframes, included in the information about the repetition of the PRACH.

Furthermore, the control section 401 may exert control so that, when a PRACH configuration index and information about how to use the subframes associated with the PRACH configuration index are received as information about the repetition of the PRACH, the PRACH is transmitted in repetitions in part or all of the subframes associated with the PRACH configuration index.

Furthermore, when a repetition factor for a UL signal (for example, the PUCCH and/or the PUSCH) is configured in a user terminal 20, the control section 401 may control the user terminal 20 to increase and decrease the number of times to repeat transmitting the PUCCH and/or the PUSCH based on information related to the repetition factor that is received from the radio base station 10.

Furthermore, the control section 401 can control the transmission signal generating section 402 to apply predetermined spreading codes to the PRACHs that are transmitted in part or all of the subframes, based on information about spreading codes (for example, OVSF codes) included in the information about the repetition of the PRACH. In this case, for example, by applying CDM to PRACHs that are transmitted in repetitions from varying user terminals 20 based on OVSF codes that are reported, it becomes possible to multiplex the PRACHs of varying repetition factors on the same resources (time/frequency resources).

Furthermore, the control section 401 may exert control so that frequency hopping is applied to the PRACH that is transmitted in repetitions in part or all of the subframes, based on information related to frequency hopping, included in the information about the repetition of the PRACH. In this case, the PRACH can be transmitted to the radio base station 10 in repetitions, in a frequency that is suitable to the communicating environment and so on, while securing frequency diversity gain, so that it is possible to achieve improved receiving performance in the radio base station 10.

For example, the control section 401 can exert control so that, when a PRACH configuration index is received as information related to frequency hopping, the PRACH is applied frequency hopping and transmitted in repetitions in part or all of the subframes associated with this PRACH configuration index. In this case, the contents of the random access configuration table used in existing LTE systems can be used, so that it is possible to receive information about the repetition of the PRACH, which includes information about frequency hopping, without changing the random access procedure in existing LTE systems significantly.

For the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

Also, when repetitious transmission of the PRACH is configured, the transmission signal generating section 402 generates the same PRACH over a plurality of subframes and outputs these to the mapping section 403. Whether or not the PRACH is transmitted in repetitions and the number of repetitions within system frames and/or between system frames are selected based on commands from the control section 401.

Furthermore, when repetitious transmission of a UL signal (for example, repetitious transmission of the PUCCH and/or the PUSCH) is configured, the transmission signal generating section 402 generates the same UL signal over a plurality of subframes and outputs these signals to the mapping section 403. The number of repetitions s may be increased and/or decreased based on commands from the control section 401.

Furthermore, based on commands from the control section 401, the transmission signal generating section 402 applies a predetermined spreading code to the PRACH to be transmitted in repetitions, based on information about spreading codes (for example, OVSF codes).

For the transmission signal generating section 402, a signal generator, a signal generating circuit or a signal generating device that can be described based on common understanding of the technical field to which the present invention pertains can be used.

The mapping section 403 maps the uplink signals generated in the transmission signal generating section 402 to radio resources (maximum 6 resource blocks) based on commands from the control section 401, and output these to the transmitting/receiving sections 203.

For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on).

The received signal processing section 404 outputs the information received from the radio base station 10, to the control section 401. The received signal processing section 404 outputs, for example, broadcast information, system information, RRC signaling, DCI and so on, to the control section 401. Also, the received signal processing section 404 may measure the received power (RSRP), the received quality (RSRQ) and channel states, by using the received signals. Note that the measurement results may be output to the control section 401.

The received signal processing section 404 can be constituted by a signal processor, a signal processing circuit or a signal processing device, and a measurer, a measurement circuit or a measurement device that can be described based on common understanding of the technical field to which the present invention pertains. Also, the received signal processing section 404 can constitute the receiving section according to the present invention.

Note that the block diagrams that have been used to describe the above embodiments illustrate blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two or more physically-separate devices via radio or wire and using these multiple devices.

For example, part or all of the functions of radio base stations 10 and user terminals 20 may be implemented using hardware such as an ASIC (Application-Specific Integrated Circuit), a PLD (Programmable Logic Device), an FPGA (Field Programmable Gate Array), and so on. Also, the radio base stations 10 and user terminals 20 may be implemented with a computer device that includes a processor (CPU), a communication interface for connecting with networks, a memory and a computer-readable storage medium that holds programs.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes. Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-080402, filed on April 9, 2015, including the specification, drawings and abstract, is incorporated herein by reference in its entirety.

## Claims

1. A user terminal, in which a bandwidth to use is limited to a partial reduced bandwidth in a system bandwidth, the user terminal comprising:
a receiving section that receives information related to repetitious transmission of a PRACH (Physical Random Access CHannel); and
a transmission section that transmits the PRACH in repetitions in part or all of subframes based on the information related to repetitious transmission.

2. The user terminal according to claim 1, wherein the transmission section transmits the PRACH in repetitions based on at least one of whether or not repetitious transmission is needed, the number of repetitions within system frames and/or between system frames, and subframes, included in the information related to repetitious transmission.

3. The user terminal according to claim 1, wherein:
the receiving section receives a PRACH configuration index as the information related to repetitious transmission; and
the transmission section transmits the PRACH in repetitions in part or all of subframes associated with the PRACH configuration index.

4. The user terminal according to claim 1, further comprising a generation section that generates an uplink signal,
wherein the generation section applies a predetermined spreading code to the PRACH, transmitted in part or all of subframes, based on information related to a spreading code, included in the information related to repetitious transmission.

5. The user terminal according to claim 1, wherein the transmission section applies frequency hopping to the PRACH, transmitted in part or all of subframes, based on information related to frequency hopping, included in the information related to repetitious transmission, and transmits the PRACH in repetitions.

6. The user terminal according to claim 5, wherein the transmission section applies frequency hopping to the PRACH, based on the information related to frequency hopping, and transmits the PRACH in repetitions within system frames and/or between system frames.

7. The user terminal according to claim 5, wherein:
the receiving section receives a PRACH configuration index; and
the transmission section transmits the PRACH in repetitions, by applying frequency hopping, in part or all of subframes associated with the PRACH configuration index.

8. A radio base station that communicates with a user terminal in which a bandwidth to use is limited to a partial reduced bandwidth in a system bandwidth, the radio base station comprising:
a transmission section transmits a downlink signal to the user terminal; and
a receiving section that receives a PRACH transmitted in repetitions from the user terminal,
wherein the transmission section reports information about repetitious transmission of the PRACH to the user terminal.

9. The radio base station according to claim 8, wherein the transmission section reports a PRACH configuration index as the information related to repetitious transmission.

10. A radio communication method to allow a user terminal, in which a bandwidth to use is limited to a partial reduced bandwidth in a system bandwidth, and a radio base station to communicate, the radio communication method comprising the steps in which:
the radio base station reports information about repetitious transmission of a PRACH to the user terminal; and
the user terminal receives information related to repetitious transmission, and, based on the information related to repetitious transmission, transmits the PRACH in repetitions in part or all of subframes.
